# EUROPÄISCHE PATENTSCHRIFT

(11) **EP 2 020 625 B1**
(45) Veröffentlichungstag und Bekanntmachung des Hinweises auf die Patenterteilung: **06.06.2012**
(21) Anmeldenummer: 07015227.7
(22) Anmeldetag: 02.08.2007
(51) Int. Cl.: F16P 3/14, H04Q 9/00

(54) **Verfahren zur Anbindung eines Bediengeräts in einem sicherheitsrelevanten Umfeld**
Method for linking an operator device in a security-related environment
Procédé de rattachement d'un organe de commande dans un environnement de sécurité

(43) Veröffentlichungstag der Anmeldung: 04.02.2009
(73) Patentinhaber: SIEMENS AKTIENGESELLSCHAFT, 80333 München (DE)
(72) Erfinder: Griessnig, Gerhard, 8010 Graz (AT)

(56) Entgegenhaltungen:
- EP-A- 1 479 964
- EP-A- 1 672 385
- WO-A-2006/000571
- WO-A-2006/105567
- WO-A-2007/025879
- US-A1- 2001 035 729

## Beschreibung

Die Erfindung befasst sich mit einem Verfahren zur Anwendung eines mobilen Geräts in einem sicherheitsrelevanten Umfeld, siehe zum Beispiel die US-A-2001/35729.

Es ist nicht zulässig, gefahrbringende Aktionen an Maschinen/ Anlagen im sicherheitsrelevanten Umfeld von jedem Ort aus durchzuführen. Die Bedienung dieser Anlagen war bisher nur an stationären Punkten oder mit kabelgebunden Geräten möglich. Diese limitierenden Faktoren sind allerdings durch die Wireless-Technologie aufgehoben. Um den Anforderungen an die Sicherheitstechnik gerecht zu werden, müssen Bereiche technisch definiert werden und eine eindeutige Zuordnung zu diesen Bereichen stattfinden. Es ist bereits bekannt entsprechende Wirkbereiche zu definieren, innerhalb derer die Bedienung einer Maschine mittels eines Bediengerätes drahtlos erfolgt. Dabei werden die Wirkbereiche von einem oder mehreren RFID-Transpondern begrenzt. An die Anwendung solcher Bediengeräte im Zusammenhang mit der Funktion der Wirkbereiche werden Anforderungen bezüglich Sicherheit gestellt.

Daher liegt der Erfindung die Aufgabe zugrunde, ein Verfahren der oben genannten Art vorzuschlagen, das durch Einführung von Sicherheitsmaßnahmen bei der Projektierung, Inbetriebnahme und Behandlung der Wirkbereiche dem geforderten Sicherheitsaspekt genügt.

Die Aufgabe wird mit den Merkmalen nach Anspruch 1 gelöst. Im Einzelnen enthält dieses Verfahren folgende Verfahrensschritte. Verfahren zur Anwendung eines mobilen Bediengerätes, mit dem mindestens eine Maschine in einer Anlage bedienbar ist, wobei die Bedienung innerhalb eines der Maschine zugeordneten Wirkbereichs erfolgt, der von einem oder mehreren RFID-Transpondern begrenzt wird, mit folgenden Schritten:
a) es wird eine Wirkbereichsliste projektiert, in der zu den in der Anlage installierten RFID-Transpondern jeweils der zugehörige Wirkbereich und der maximale Abstand des Bediengeräts zu den betreffenden RFID-Transpondern hinterlegt ist und
b) die Wirkbereichsliste wird überprüft, wozu mit dem Bediengerät im Prüfmodus in den Wirkbereichen der RFID-Transponder von diesen die betreffende Transponder-Identifikationsnummer empfangen wird und daraufhin die betreffende Wirkbereichsidentifikationsnummer angezeigt wird.

Vorteilhafte Weiterbildungen des Verfahrens sind den Unteransprüchen zu entnehmen.

Ein Ausführungsbeispiel der Erfindung wird im Folgenden anhand einer Zeichnung näher erläutert. Es zeigen:
FIG 1 ein System mit einem mobilen, drahtlos kommunizierenden Bediengerät zum Bedienen von Maschinen in sicherheitsrelevanten Umfeld,
FIG 2 eine Wirkbereichsliste für das Bediengerät eines Systems gemäß FIG 1,
FIG 3 eine Liste mit Wirkbereichen und diesen zugeordneten Namen und
FIG 4 einen Ablaufplan mit Verfahrensschritten zur Realisierung von Sicherheitsmaßnahmen.

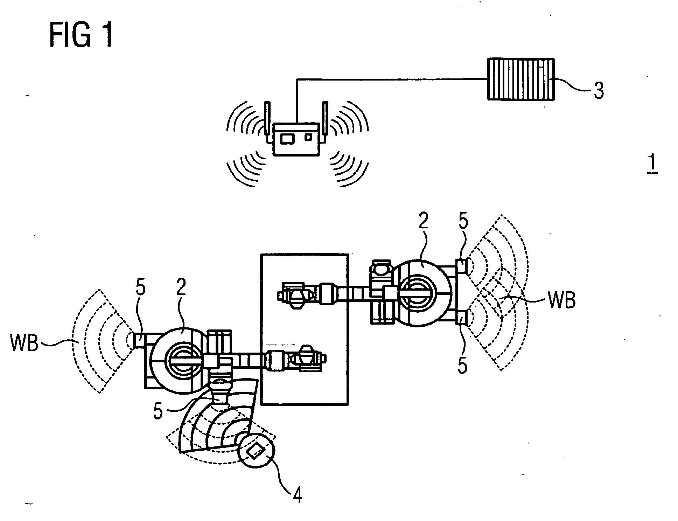

In FIG 1 ist ein System 1 zum Bedienen von Maschinen 2 oder Anlagen dargestellt. Das System 1 weist eine Steuerung 3 und ein mobiles Bediengerät 4 auf, das über Mittel zur drahtlosen Kommunikation, hier speziell eine Funkverbindung, mit der Steuerung 3 verfügt.

Die Bedienung der Maschinen 2 ist nur nach Anmeldung in Wirkbereichen WB, die über spezielle RFID-Transponder (TAG) 5 aufgespannt sind, zulässig. Erst nach einer Anmeldung in diesen Wirkbereichen WB können "gefahrbringende" Aktionen z.B. Verfahren von Maschinen durchgeführt werden.

Um den Anforderungen der Sicherheitstechnik gerecht zu werden, müssen Bereiche technisch definiert werden, und es muss eine eindeutige Zuordnung zu diesen Bereichen stattfinden. Dementsprechend sind für das System 1 Wirkbereiche WB definiert, die von einem oder mehreren RFID-Transpondern 5 aufgespannt werden. Dabei ist die räumliche Definition der Wirkbereiche WB durch die Antennencharakteristik der RFID-Transponder 5 sowie durch den projektierbaren maximalen Abstand des mobilen Bediengeräts zu den betreffenden RFID-Transponder 5 bestimmt.

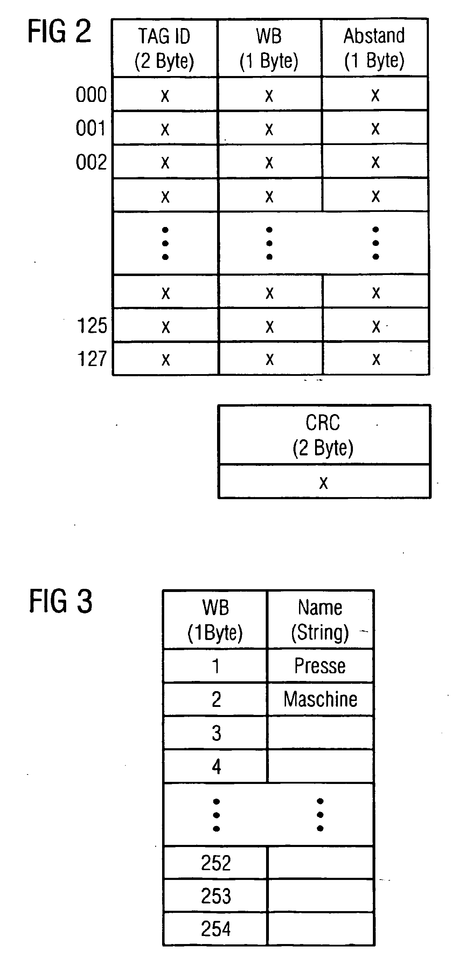

Das mobile Bediengerät 4 weist nicht sicherheitsrelevante Hardware- und Softwarekomponenten (Wirkbereichsmodul, WLAN, HMI, ...) auf, die durch ein Sicherheitsmodul (F-Modul) mit Sicherheitsmaßnahmen unterstützt werden, um erfindungsgemäß sicherheitsrelevante Wirkbereiche WB zu realisieren. Hierzu erfolgt zunächst die Projektierung der oben genannten aufgespannten Wirkbereiche mit einem Engineering-System ES. Für jeden Wirkbereich WB werden eine zugehörige Transponder-Identifikationsnummer TAG-ID und ein maximal zulässiger Abstand des mobilen Bediengeräts 4 gemäß der Tabelle in FIG 3 vergeben.

Eine fehlerhafte Eingabe in der Projektierung (WB, TAG-ID,) mit dem Engineeringsystem ES bzw. eine fehlerhafte Montage von RFID-Transpondern 5 kann zu einer unzulässigen Bedienung der Wirkbereiche WB führen. Um dies zu verhindern, werden Sicherungsmechanismen definiert, die über technische und organisatorische Maßnahmen die Überprüfung der projektierten Wirkbereiche WB durchführen und eine Freigabe der Projektierung und der realisierten Wirkbereiche WB ermöglichen.

Als erste Sicherheitsmaßnahme erfolgt eine Überprüfung der eingegebenen Parameter auf Plausibilität. Dabei wird geprüft, dass die Wirkbereiche WB und die Transponder eindeutig sind.

Zusätzlich wird geprüft, ob der projektierte Abstand innerhalb eines Wirkbereichs WB gleich ist. Weiterhin wird sichergestellt, dass die Projektierung mit der Installation in der Anlage übereinstimmt. Diese Überprüfung der Projektierung und Installation wird durch den Benutzer mit dem Bediengerät 4 durchgeführt und durch einen sicherheitsrelevanten Parameter CRC technisch unterstützt.

Um eine Anmeldung in einem "falschen" Wirkbereich WB zu erschweren oder zu verhindern, wird als weitere Sicherheitsmaßnahme jedem durch eine Wirkbereichsidentifikationsnummer WB-ID gekennzeichneten Wirkbereich WB ein eigener Name zugeordnet, wie in FIG 3 dargestellt. Dahinter steht die Idee, dass die "unsichere" Applikation HMI mit den Namen für die Wirkbereiche WB arbeitet und den Benutzer nur die Namen für die Wirkbereiche WB angezeigt werden. Das Sicherheitsmodul (F-Modul) des mobilen Bediengeräts 4 arbeitet hingegen mit den Wirkbereichsidentifikationsnummern WB-ID. Bei einer Anmeldung in einem Wirkbereich WB muss sich der Benutzer auch im entsprechenden Wirkbereich WB befinden, was im Sicherheitsmodul (F-Modul) überprüft wird, wozu der Benutzer die in der Anlage fest montierte zugehörige Wirkbereichsidentifikationsnummer WB-ID über das HMI des mobilen Bediengeräts 4 eingibt. Diese Eingabe wird im Sicherheitsmodul (F-Modul) mit den momentan ermittelten Daten geprüft. HMI ist in bekannter Weise die Benutzerschnittstelle Mensch-Maschine.

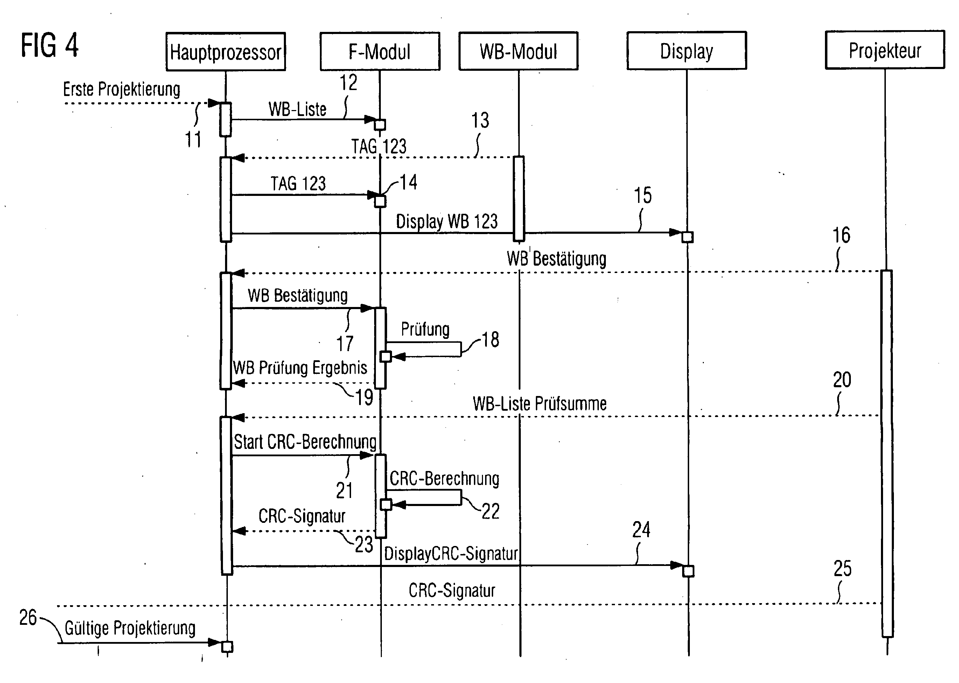

Die Überprüfung der mit den Engineering-System ES projektierten Wirkbereichsliste WB-Liste erfolgt anhand der Verfahrensschritte 11 bis 26, die in FIG 4 dargestellt sind und im Folgenden erläutert werden.
- Verfahrensschritt 11:: Die erste Projektierung ist unvollständig. Die WB-Liste ist zu diesem Zeitpunkt noch nicht geprüft.
- Verfahrensschritt 12:: Die WB-Liste hat noch keine CRC-Signatur. Das F-Modul und das HMI gehen in den WB-Prüfmodus.
- Verfahrensschritt 13: Das WB-Modul läuft und liefert die empfangenen TAG-IDs mit den entsprechenden Abständen.
- Verfahrensschritt 14: Die informationen der TAGs werden dem F-Modul zur Verfügung gestellt.
- Verfahrensschritt 15: Es wird die TAG ID und der damit verbundene WB am Display dargestellt.
- Verfahrensschritt 16: Der Anwender überprüft den WB am Display mit der Kennung an der Maschine. Sind beide gleich, so bestätigt der Anwender diesen WB.
- Verfahrensschritt 17: Bei der Bestätigung schickt das HMI dem F-Modul den im HMI erkannten WB und TAG.
- Verfahrensschritt 18: Das F-Modul überprüft ob der vom HMI empfangene WB mit dem am F-Modul ermittelten WB zusammen passt. Stimmt dies, so wird dieser Eintrag in der WB-Liste als geprüft vermerkt.
- Verfahrensschritt 19: Das F-Modul gibt das Ergebnis der Prüfung dem HMI zurück.
- Verfahrensschritt 20: Sind alle Einträge in der WB-Liste geprüft und bestätigt, so fordert der Projekteur die Prüfsumme der WB-Liste an.
- Verfahrensschritt 21: Das HMI fordert die Prüfsumme der WB-Liste vom F-Modul an.
- Verfahrensschritt 22: Das F-Modul berechnet die CRC-Summe nur über die Einträge der WB-Liste die das F-Modul als geprüft gekennzeichnet hat. Wurden nicht alle Einträge der WB-Liste die das F-Modul als geprüft gekennzeichnet hat. Wurden nicht alle Einträge geprüft, so stimmt die abgelegte CRC nicht mit der projektierten CRC zusammen.
- Verfahrensschritt 23: Die ermittelte CRC-Signatur wird CRC-gesichert dem HMI übergeben und auf das Flash des Bediengeräts abgelegt. Diese CRC muss bei der Initialisierung des F-Moduls dem F-Modul immer übergeben werden.
- Verfahrensschritt 24: Die vom F-Modul ermittelte CRC-Summe wird am Display angezeigt.
- Verfahrensschritt 25: Der Anwender muss die am Display angezeigte CRC-Signatur ins ES eingeben.
- Verfahrensschritt 26: Der Projekteur spielt die "Neue-Projektierung" auf das Bediengerät.

HMI ist in bekannter Weise die Benutzerschnittstelle Mensch-Maschine.

Es folgt eine kurze Erläuterung der in den vorstehenden Verfahrensschritten verwendeten Begriffe. Mit ES ist ein Engineeringsystem zum Projektieren und Verwalten von Projekten bezeichnet. Der Hauptprozessor ist ein Standardprozessor mit Standardsoftware und Runtime HMI, der mit dem Sicherheitsmodul (F-Modul) über eine serielle Schnittstelle kommuniziert. Das F-Modul enthält sicherheitsrelevante Hardware und Software. Mit WB-Modul ist ein Wirkbereichsmodul bezeichnet, das Hardware und Software für die Erfassung der RFID-Transponder enthält. Mit Display ist die Anzeige des Bediengeräts 4 bezeichnet, um "unsichere" Informationen anzuzeigen.

## Patentansprüche

1. Verfahren zur Anwendung eines mobilen Bediengeräts (4), mit dem mindestens eine Maschine (2) sicherheitsrelevant in einer Anlage bedienbar ist, wobei die Bedienung innerhalb eines der Maschine (2) zugeordneten Wirkbereichs (WB) erfolgt, der von einem oder mehreren RFID-Transpondern (5) begrenzt wird, mit folgenden Schritten:
a) Es wird eine Wirkbereichsliste (WB-Liste) projektiert, in der zu den in der Anlage installierten RFID-Transpondern (5) jeweils der zugehörige Wirkbereich (WB) und der maximale Abstand des Bediengeräts (4) zu den betreffenden RFID-Transpondern (5) hinterlegt ist und
b) die Wirkbereichsliste (WB-Liste) wird überprüft, wozu mit dem Bediengerät (4) im Prüfmodus in den Wirkbereichen (WB) der RFID-Transponder (5) von diesen die betreffende Transponderidentifikationsnummer (TAG-ID) empfangen, und daraufhin die zugehörige Wirkbereichsidentifikationsnummer (WB-ID) angezeigt wird.

2. Verfahren nach Anspruch 1,
**dadurch gekennzeichnet, dass** bei Gleichheit der angezeigten Wirkbereichsidentifikationsnummer (WB-ID) mit der Kennung an der betreffenden Maschine (2) ein entsprechender bestätigender Prüfvermerk in der Wirkbereichsliste (WB-Liste) erfolgt.

3. Verfahren nach Anspruch 2,
**dadurch gekennzeichnet, dass** nach Prüfung aller Einträge in der Wirkbereichsliste (WB-Liste) mit Vorliegen der entsprechenden bestätigenden Prüfvermerke eine Prüfsumme (CRC) gebildet wird.

4. Verfahren nach einem der oben genannten Ansprüche,
**dadurch gekennzeichnet, dass** den Wirkbereichen (WB) Namen zugeordnet sind und dem Benutzer bei der Anmeldung in einem Wirkbereich (WB) der betreffende Name angezeigt wird, woraufhin der Benutzer die für den Wirkbereich (WB) betreffende, im Bereich der betreffenden Maschine (2) ablesbare Kennung in das Bediengerät (4) eingibt.

## Claims

1. Method for using a mobile control device (4), with which at least one machine (2) can be controlled in a safety-related fashion in a system, the control being effected within an effective range (WB) which is assigned to the machine (2), said effective range being delimited by one or more RFID transponders (5), with the following steps:
a) an effective range list (WB List) is configured, in which in each case the associated effective range (WB) and the maximum distance between the control device (4) and the relevant RFID transponders (5) are stored for the RFID transponders (5) installed in the system and
b) the effective range list (WB List) is checked, for which purpose the relevant transponder identification number (TAG-ID) is received from the RFID transponders (5) using the control device (4) in test mode in the effective ranges (WB) of said RFID transponders (5), and subsequently the associated effective range identification number (WB-ID) is displayed.

2. Method according to claim 1,
**characterised in that** if the displayed effective range identification number (WB-ID) is identical to the coding on the relevant machine (2) a corresponding confirmation check remark is made in the effective range list (WB List).

3. Method according to claim 2,
**characterised in that** after checking all entries in the effective range list (WB List) and in the presence of the corresponding confirmation check remarks a checksum (CRC) is formed.

4. Method according to one of the preceding claims, **characterised in that** names are assigned to the effective ranges (WB) and the relevant name is displayed to the user when logging on in an effective range (WB), whereupon the user enters into the control device (4) the coding which is relevant to the effective range (WB) and which can be read in the range of the relevant machine (2).

## Revendications

1. Procédé d'utilisation d'un appareil (6) mobile de commande, par lequel au moins une machine (2) peut être commandée en sécurité dans une installation, la commande s'effectuant dans une zone ( WB ) d'action associée à la machine ( 2 ) et délimitée par un ou par plusieurs transpondeurs ( 5 ) RFID, comprenant les stades suivants :
a) on dresse une liste ( liste WB ) de zones d'action, dans laquelle on associe aux transpondeurs RFID ( 5 ) installés dans l'installation respectivement la zone ( WB ) d'action associée et la distance maximum de l'appareil (4) de commande aux transpondeurs RFID ( 5 ) concernés et
b) on contrôle la liste ( liste WB) de zones d'action en recevant à cet effet par l'appareil ( 4 ) de commande, dans le mode de contrôle, dans les zones (WB) d'action des transpondeurs RFID ( 5 ) par ceux-ci, les numéros ( TAG-ID ) d'identification des transpondeurs concernés, et on affiche ensuite les numéros (WB-ID) d'identification de zones d'action associées.

2. Procédé suivant la revendication 1,
**caractérisé en ce que**, s'il y a identité du numéro (WB-ID) d'identification de zones d'action affichées avec la caractérisation sur la machine ( 2 ) concernée, une note de contrôle confirmative correspondante est mise dans la liste ( liste WB ) de zones d'action.

3. Procédé suivant la revendication 2,
**caractérisé en ce qu'**après avoir contrôlé toutes les entrées dans la liste ( liste WB ) de zones d'action ayant une présence des notes de contrôle confirmatives correspondantes, on forme une somme ( CRC ) de contrôle.

4. Procédé suivant l'une des revendications mentionnées ci-dessus,
**caractérisé en ce que** l'on associe aux zones ( WB ) d'action des noms et on indique à l'utilisateur à la demande dans une zone ( WB ) d'action le nom concerné, l'utilisateur entrant ensuite dans l'appareil ( 4 ) de commande la caractérisation concernant la zone ( WB ) d'action et pouvant être lue dans la zone de la machine ( 2 ) concernée.
